# FASCICULE DE BREVET EUROPEEN

(11) **EP 3 029 878 B1**
(45) Date de publication et mention de la délivrance du brevet: **27.05.2020**
(21) Numéro de dépôt: 15197986.1
(22) Date de dépôt: 04.12.2015
(51) Int. Cl.: H04L 9/08, H04L 9/32

(54) **PROCÉDÉ DE TRANSMISSION DE SECRET À DURÉE DE VIE LIMITÉE POUR RÉALISER UNE TRANSACTION ENTRE UN TERMINAL MOBILE ET UN ÉQUIPEMENT**
VERFAHREN ZUR ÜBERTRAGUNG EINES GEHEIMNISSES MIT BEGRENZTER LEBENSDAUER, UM EINE TRANSAKTION ZWISCHEN EINEM MOBILEN ENDGERÄT UND EINER AUSSTATTUNG DURCHZUFÜHREN
METHOD FOR TRANSMITTING A SECRET WITH LIMITED LIFETIME FOR CONDUCTING A TRANSACTION BETWEEN A MOBILE TERMINAL AND A SYSTEM

(30) Priorité: 04.12.2014 FR 1461929
(43) Date de publication de la demande: 08.06.2016
(73) Titulaire: Dejamobile, 14200 Herouville Saint Clair (FR)
(72) Inventeur: SAIF, Ahmad, 14200 Herouville Saint Clair (FR); PAILLES, Jean-Claude, 14200 Herouville Saint Clair (FR)
(74) Mandataire: Cabinet Le Guen Maillet

(56) Documents cités:
- US-A1- 2012 137 132
- US-A1- 2014 108 263
- KASPER T ET AL: "Rights Management with NFC Smartphones and Electronic ID Cards: A Proof of Concept for Modern Car Sharing", ADVANCES IN COMMUNICATION NETWORKING : 20TH EUNICE/IFIP EG 6.2, 6.6 INTERNATIONAL WORKSHOP, RENNES, FRANCE, SEPTEMBER 1-5, 2014, REVISED SELECTED PAPERS; [LECTURE NOTES IN COMPUTER SCIENCE , ISSN 1611 , no. 558 9 juillet 2013 (2013-07-09), pages 34-53, XP047044654, ISSN: 0302-9743 ISBN: 978-3-642-36699-4 Extrait de l'Internet: URL:http://rd.springer.com/chapter/10.1007 /978-3-642-41332-2_3
- "Secure Authentication for Mobile Internet Services Critical Considerations December 2011 - V1 Secure element architects for today's generation Secure Authentication for Mobile Internet Services 2", , 31 décembre 2011 (2011-12-31), pages 1-23, XP055214694, Extrait de l'Internet: URL:http://simalliance.org/wp-content/uplo ads/2015/03/12-01-01-WP_SIMallianceSecureA uthentication-EN-V1.1.pdf [extrait le 2015-09-21]

## Description

La présente invention concerne un système transactionnel dans lequel un terminal mobile dispose d'un élément de sécurité pour sécuriser des réceptions de secrets destinés à être utilisés par une application logicielle du terminal mobile dans le cadre d'un service transactionnel.

Des systèmes de transactions sans contact, notamment dans le cadre de services de paiement, ont fait leur apparition sur le marché ces dernières années et sont promis à un essor important. Des cartes bancaires ou autres cartes à puce (« smart card » en anglais) utilisent ainsi des technologies de communication de type communication en champ proche NFC (« Near Field Communication » en anglais) pour effectuer des transactions sécurisées, permettant ainsi des transactions plus rapides que par insertion de carte dans un lecteur. De telles cartes sont équipées d'un élément de sécurité SE (« Secure Element » en anglais), c'est-à-dire d'un élément matériel hermétique permettant de sécuriser des exécutions d'instructions de programme d'ordinateur et de sécuriser ainsi des opérations de génération et d'échanges de secrets, *i.e.* de données qui doivent rester secrètes pour garantir l'intégrité des transactions, comme par exemple des clés de session.

Un mode d'émulation de carte de la technologie NFC a permis de développer cette approche sur des terminaux mobiles, tels que des téléphones intelligents (« smartphone » en anglais), autorisant ainsi de réaliser des transactions, notamment bancaires, directement à partir de ces terminaux mobiles. Une évolution de ce mode d'émulation de carte a permis d'éviter de recourir à un tel élément de sécurité, remplaçant ainsi un besoin matériel au sein des terminaux mobiles par un besoin logiciel, en déplaçant la génération des secrets sur un serveur distant auquel lesdits terminaux mobiles accèdent par communication sans-fil. Cette évolution du mode d'émulation de carte facilite considérablement le déploiement et la mise à jour de services transactionnels sur des terminaux mobiles utilisant la technologie NFC, puisqu'une application utilisant la technologie NFC peut être téléchargée depuis un magasin d'applications en ligne (« online application store » en anglais) comme toute autre application logicielle destinée à être installée sur des terminaux mobiles.

Il existe toutefois une contrepartie au niveau sécuritaire résultant de la non utilisation d'un élément de sécurité matériel dans ces services transactionnels. Considérons une application logicielle légitime, *e.g.* de paiement sans contact, installée sur un terminal mobile d'un utilisateur d'un service transactionnel auquel ledit utilisateur accède via ladite application logicielle légitime. L'application logicielle légitime stocke donc en mémoire du terminal mobile des secrets reçus dudit serveur distant permettant notamment d'identifier ledit utilisateur dans le cadre du service transactionnel. L'environnement du système d'exploitation OS (« Operating System » en anglais) des terminaux mobiles est réputé non fiable, en ce sens que des propriétés d'intégrité des données ou des applications logicielles ne peuvent être totalement garanties dans la mémoire du terminal mobile. Ainsi, si ledit terminal mobile est infecté d'une application malicieuse (« malware » en anglais), il est possible que ladite application logicielle légitime et son contexte soient copiés, et envoyés à un serveur distant illégitime afin qu'une copie illégitime en soit exécutée sur un autre terminal mobile. Cette copie illégitime pourrait alors usurper l'identité dudit utilisateur et récupérer les secrets en lieu et place de ladite application logicielle légitime pour réaliser des transactions au détriment dudit utilisateur légitime. De plus, ladite application malicieuse a la possibilité d'espionner des données manipulées par toute application logicielle, y compris ladite application logicielle légitime, et de les envoyer à un tel serveur illégitime afin d'en extraire lesdits secrets pour réaliser des transactions au détriment dudit utilisateur légitime.

Le ,document « Rights Management with NFC Smartphone and Electronic ID cards : A Proof of Concept for Modem Car Sharing », TimoKasper et al, « Advances in Communication Networking: 20th EUNICE/ IFIP EG 6.2, 6.6 International Workshop, Rennes, France, Sept. 2014, Revised Selected Papers », divulgue un mécanisme qui identifie un client sur un site web et qui crée un secret personnel contenant des informations de permission d'accès personnalisées à l'égard du client. Installé sur un téléphone intelligent, ce secret permet au client d'accéder à un objet équipé d'une technologiede communication en champ proche NFC ou à un service offert par ledit objet, notamment dans le cadre d'un service de location de véhicules.

Le document US 2014/108263 A1se rapporteà la création, l'administration, la manipulation, le traitement et le stockage de données utiles dans le cadre de services transactionnels de paiement.

Il est souhaitable de pallier ces différents inconvénients de l'état de la technique.

Il est aussi souhaitable de fournir une solution qui soit adaptée à une pluralité d'applications métier, c'est-à-dire qui soit suffisamment générique pour permettre de supporter une variété de services transactionnels.

Il est aussi souhaitable de fournir une solution qui soit simple à mettre en œuvre et à faible coût.

L'invention est définie dans les revendications indépendantes. Les modes de réalisation préférés sont définis dans les revendications dépendantes. La présente invention concerne un procédé de transmission d'au moins un secret à durée de vie limitée destiné à être utilisé dans un service transactionnel pour réaliser une transaction entre un terminal mobile et un équipement afin de permettre audit équipement de valider la transaction auprès d'un système d'autorisation de transaction, le terminal mobile exécutant une application logicielle destinée à permettre au terminal mobile d'interagir dans le cadre du service transactionnel, le terminal mobile intégrant ou étant connecté à un élément de sécurité stockant hermétiquement au moins une première clé de signature et/ou de chiffrement. Lors d'une phase de récupération du ou des secrets à durée de vie limitée : l'application logicielle prépare une requête de récupération du ou des secrets à durée de vie limitée destinée à être envoyée au système d'autorisation de transaction ; l'application logicielle instruit l'élément de sécurité d'apposer une signature et/ou un chiffrement, à l'aide d'au moins une dite première clé, à ladite requête préparée, et transmet au système d'autorisation de transaction ladite requête signée et/ou chiffrée ; le système d'autorisation de transaction transmet à l'application logicielle ledit ou lesdits secrets à durée de vie limitée, après vérification, grâce à une connaissance de chaque première dite clé, que ladite requête signée et/ou chiffrée est authentique. Puis, pour effectuer la transaction, l'application logicielle transmet à l'équipement ledit ou lesdits secrets à durée de vie limitée ou des informations dérivées dudit ou desdits secrets à durée de vie limitée. Le ou les secrets à durée de vie limitée sont stockés par l'application logicielle dans une mémoire du terminal mobile et le système d'autorisation de transaction valide la transaction grâce audit ou auxdits secrets à durée de vie limitée ou aux informations dérivées dudit ou desdits secrets à durée de vie limitée, tels que reçus de l'équipement. Ainsi, l'emploi de l'élément sécurisé permet d'assurer qu'une application malicieuse ne puisse pas obtenir à volonté des secrets et permettre d'effectuer des transactions à volonté au détriment de l'utilisateur du terminal mobile. Le fait que les secrets soient à durée de vie limitée permet d'assurer qu'une application malicieuse qui aurait récupéré des secrets ainsi obtenus par ladite application logicielle ne puisse pas indéfiniment s'en servir. Des risques d'usage frauduleux sont ainsi limités. De plus, par utilisation de la sorte de l'élément de sécurité, une solution suffisamment générique pour permettre de supporter une variété de services transactionnels est apportée. En effet, une même élément de sécurité peut ainsi fournir les moyens d'apposer une signature et/ou un chiffrement pour le compte d'une pluralité de telles applications logicielles, chacune de ces applications logicielles étant alors dédié à un service transactionnel particulier.

Selon un mode de réalisation particulier, le système d'autorisation de transaction transmet à l'application logicielle ledit ou lesdits secrets à durée de vie limitée sous forme chiffrée à l'aide d'au moins une dite première, et l'application instruit l'élément de sécurité de déchiffrer ledit ou lesdits secrets à durée de vie limitée reçus sous forme chiffrée. Ainsi, si la transmission des secrets venait à être interceptée par un tiers, les secrets ne seraient pas utilisables puisque chiffrés.

Selon un mode de réalisation particulier, l'élément de sécurité disposant d'une seconde clé, publique, contenue dans un certificat et d'une troisième clé, privée, permettant une mise en œuvre de chiffrement asymétrique, caractérisé en ce que, lors d'une phase préalable d'initialisation : l'application logicielle obtient ledit certificat auprès de l'élément de sécurité ; l'application logicielle transmet au système d'autorisation de transaction une requête d'initialisation du service transactionnel contenant le certificat obtenu, ainsi que des informations permettant d'identifier l'application logicielle et le terminal mobile ; le système d'autorisation de transaction transmet à l'application logicielle chaque dite première clé sous forme chiffrée à l'aide de la seconde clé contenue dans le certificat reçu, en réponse à ladite requête d'initialisation du service transactionnel ; et l'application logicielle fournit à l'élément de sécurité chaque dite première clé reçue sous forme chiffrée, afin de permettre à l'élément de sécurité de déchiffrer chaque dite première clé grâce à ladite troisième clé. Ainsi, l'obtention de chaque dite première clé est sécurisé.

Selon un mode de réalisation particulier, lors de la phase d'initialisation : l'application logicielle requiert que l'utilisateur du terminal mobile fournisse des premières données d'identification personnelle ; l'application logicielle transmet à l'élément de sécurité les premières données d'identification personnelle, afin de permettre à l'élément de sécurité de stocker les premières données d'identification personnelle transmises, en association avec un identifiant de l'application logicielle et/ou avec chaque dite première clé. Et, pour faire apposer une signature et/ou un chiffrement sur un message par l'élément de sécurité : l'application logicielle requiert que l'utilisateur du terminal mobile fournisse des secondes données d'identification personnelle ; et l'application logicielle transmet à l'élément de sécurité les secondes données d'identification personnelle, afin de permettre à l'élément de sécurité de n'apposer la signature et/ou le chiffrement que lorsque les premières et secondes données d'identification personnelle coïncident. Ainsi, des risques que la transaction soit effectuée sans le consentement de l'utilisateur légitime du terminal mobile sont limités.

Selon un mode de réalisation particulier, pour effectuer la transaction : l'application logicielle reçoit de l'équipement une demande d'authentification ; l'application logicielle prépare une réponse à la demande d'authentification reçue et instruit l'élément de sécurité d'apposer une signature et/ou un chiffrement, à l'aide d'une dite première clé, à ladite réponse préparée, et transmet à l'équipement ladite réponse signée et/ou chiffrée, afin de permettre à l'équipement de valider la transaction auprès du système d'autorisation de transaction en outre grâce à ladite signature et/ou audit chiffrement. Ainsi, la sécurité de la transaction est renforcée.

Selon un mode de réalisation particulier, la signature apposée par l'élément de sécurité à ladite réponse préparée est parmi le groupe suivant : une signature ajoutée à une signature déjà présente dans ladite réponse préparée ; une sur-signature d'une signature déjà présente dans ladite réponse préparée, par chiffrement de la signature déjà présente ; une sur-signature d'une signature déjà présente dans ladite réponse préparée, par une opération de OU exclusif entre les deux signatures ; et une signature de remplacement d'une signature déjà présente dans ladite réponse préparée.

Selon un mode de réalisation particulier, le service transactionnel étant un service de paiement sans contact, la signature est apposée par l'élément de sécurité dans un champ appelé Autorisation Request Cryptogram dans les spécifications Europay MasterCard Visa. Ainsi, l'impact de mise en œuvre sur les structures transactionnelles bancaires existantes qui permettent de réaliser des paiements par carte bancaire est limité. Il n'y a notamment aucun impact sur les terminaux de paiement installés dans les points de vente.

Selon un mode de réalisation particulier, lorsque l'application logicielle détecte que ledit ou lesdits secrets sont à renouveler : l'application logicielle prépare une requête de renouvellement du ou des secrets à durée de vie limitée destinée à être envoyée au système d'autorisation de transaction ; l'application logicielle instruit l'élément de sécurité d'apposer une signature et/ou un chiffrement, à l'aide d'au moins une dite première clé, à ladite requête préparée, et transmet au système d'autorisation de transaction ladite requête signée et/ou chiffrée ; et le système d'autorisation de transaction transmet à l'application logicielle un nouveau ou des nouveaux secrets à durée de vie limitée, après vérification, à une connaissance de chaque dite première clé, que ladite requête signée et/ou chiffrée est authentique. Ainsi, le renouvellement des secrets est aussi sécurisé.

Selon un mode de réalisation particulier, le service transactionnel est un service de paiement bancaire sans contact, le terminal mobile est un téléphone intelligent et l'équipement est un point d'acceptation de paiement, le terminal mobile et l'équipement communiquant par communications en champ proche.

L'invention concerne également un terminal mobile adapté pour réaliser une transaction avec un équipement dans un service transactionnel, le terminal mobile étant adapté pour recevoir au moins un secret à durée de vie limitée destiné à être utilisé dans un service transactionnel afin de permettre audit équipement de valider la transaction auprès d'un système d'autorisation de transaction, le terminal mobile étant destiné à exécuter une application logicielle destinée à permettre au terminal mobile d'interagir dans le cadre du service transactionnel, le terminal mobile intégrant ou étant destiné à être connecté à un élément de sécurité stockant hermétiquement au moins une clé de signature et/ou de chiffrement. Le terminal est en outre adapté pour que, lors d'une phase de récupération du ou des secrets à durée de vie limitée : l'application logicielle prépare une requête de récupération du ou des secrets à durée de vie limitée destinée à être envoyée au système d'autorisation de transaction ; l'application logicielle instruit l'élément de sécurité d'apposer une signature et/ou un chiffrement, à l'aide d'au moins une dite clé, à ladite requête préparée, et transmet au système d'autorisation de transaction ladite requête signée et/ou chiffrée ; l'application logicielle reçoit ledit ou lesdits secrets à durée de vie limitée en provenance du système d'autorisation de transaction ; et, pour effectuer la transaction, l'application logicielle transmet à l'équipement ledit ou lesdits secrets à durée de vie limitée ou des informations dérivées dudit ou desdits secrets à durée de vie limitée. Le ou les secrets à durée de vie limitée sont stockés par l'application logicielle dans une mémoire du terminal mobile, et ledit ou lesdits secrets à durée de vie limitée, ou les informations dérivées dudit ou desdits secrets à durée de vie limitée, sont transmis par l'application logicielle audit équipement, afin de permettre à l'équipement de valider la transaction auprès du système d'autorisation de transaction grâce audit ou auxdits secrets à durée de vie limitée ou aux informations dérivées dudit ou desdits secrets à durée de vie limitée.

L'invention concerne également un programme d'ordinateur, qui peut être stocké sur un support et/ou téléchargé d'un réseau de communication, afin d'être lu par un système informatique. Ce programme d'ordinateur comprend des instructions pour causer une mise en œuvre des étapes du procédé mentionné ci-dessus réalisées par l'application logicielle, lorsque ledit programme est exécuté par un processeur du terminal mobile. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1A illustre schématiquement un système mettant en œuvre un service transactionnel et dans lequel la présente invention peut être implémentée, dans une situation de mise en œuvre du service transactionnel ;
- la Fig. 1B illustre schématiquement le système mettant en œuvre le service transactionnel et dans lequel la présente invention peut être implémentée, dans une situation de configuration du service transactionnel ;
- la Fig. 2 illustre schématiquement un exemple d'architecture matérielle d'un terminal mobile utilisé dans le cadre du système de la Fig. 1 ;
- la Fig. 3 illustre schématiquement des échanges de messages dans une phase d'initialisation du service transactionnel ;
- la Fig. 4 illustre schématiquement des échanges de messages dans une phase de récupération de secrets pour une mise en œuvre du service transactionnel ;
- la Fig. 5 illustre schématiquement des échanges de messages dans le cadre d'une utilisation desdits secrets pour la mise en œuvre du service transactionnel ; et
- la Fig. 6 illustre schématiquement des échanges de messages dans le cadre d'une mise à jour desdits secrets pour une nouvelle mise en œuvre du service transactionnel.

La présente invention s'applique dans le domaine de la sécurité de transactions sans contact basées sur une utilisation de secrets à durée de vie limitée par un terminal mobile (e.g. un téléphone intelligent ou une tablette électronique) via une technologie de communication sans-fil. Dans un mode de réalisation particulier, de tels secrets à durée de vie limitée sont des clés de session à durée de vie limitée utilisées pour valider des paiements dans le cadre d'un service de paiement sans contact. Un secret à durée de vie limitée est un secret auquel est associée une forme d'expiration, comme par exemple une date d'expiration au-delà de laquelle le secret n'est plus valide, ou un nombre d'utilisations possibles du secret (e.g. expiration du secret après N utilisations, avec N ≥ 1), ou un volume transactionnel maximum possible avec le secret (*e.g.* un montant maximum dans une transaction financière, ou une quantité maximum de crédits utilisables dans une transaction relative à un service de fidélisation de clientèle). Chaque secret peut être en outre associé à des limitations de conditions d'utilisation particulières, comme par exemple une position géographique d'utilisation, des tranches horaires d'utilisation, etc...

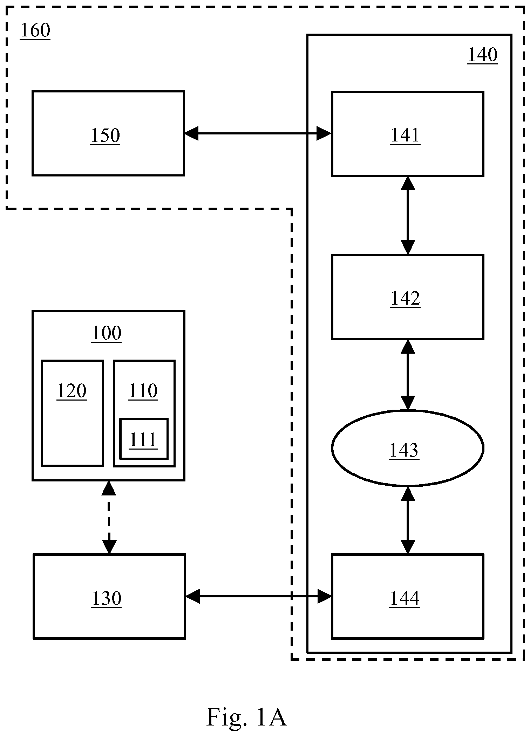

La Fig. 1A illustre schématiquement un système mettant en œuvre un service transactionnel et dans lequel la présente invention peut être implémentée. La Fig. 1A illustre plus particulièrement ledit système dans une situation de mise en œuvre du service transactionnel.

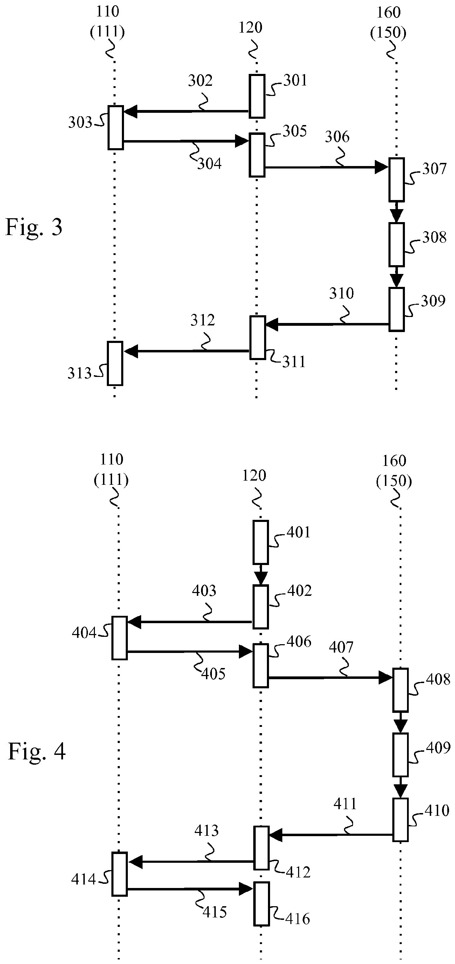

Plus particulièrement, la Fig. 1A présente un terminal mobile 100 détenu par un utilisateur et grâce auquel ledit utilisateur souhaite réaliser, de manière sécurisée, au moins une transaction avec un équipement 130 dans le cadre du service transactionnel. Dans le cadre de chaque transaction, le terminal mobile 100 est supposé communiquer des données de sécurisation à l'équipement 130. Les transactions sont effectuées de manière sécurisée en ce que l'équipement 130 est apte à requérir auprès d'un système d'autorisation de transaction 160, qui est de confiance, que les données de sécurisation reçues de la part de l'équipement 130 soient validées. Le système d'autorisation de transaction 160 se porte alors garant pour le terminal mobile 100 auprès de l'équipement 130, le terminal mobile 100 ayant été préalablement enregistré auprès du système d'autorisation de transaction 160. Un mode de réalisation de cet enregistrement préalable auprès du système d'autorisation de transaction 160 est détaillé ci-après en relation avec la Fig. 3. Pour permettre au système d'autorisation de transaction 160 de se porter garant, le système d'autorisation de transaction 160 fournit préalablement et de manière sécurisée, tel que décrit ci-après en relation avec la Fig. 4, des secrets au terminal mobile 100.

Les données de sécurisation correspondent à un ou plusieurs de ces secrets, ou à des données dérivées desdits secrets. Lorsque le terminal mobile 100 fournit à l'équipement 130 des données de sécurisation dérivées de secrets, lesdites données de sécurisation sont par nature aptes à permettre à un dispositif ayant connaissance desdits secrets de vérifier que lesdites données de sécurisation ont effectivement été dérivées desdits secrets. L'équipement 130 reçoit donc ainsi les données de sécurisation de la part du terminal mobile 100 dans le cadre de la transaction et peut requérir une validation de l'authenticité des données de sécurisation auprès du système d'autorisation de transaction 160 grâce à l'utilisation du ou des secrets. Après avoir validé l'authenticité des données de sécurisation, le système d'autorisation de transaction 160 peut alors autoriser la transaction auprès de l'équipement 130.

Pour expliciter plus en avant l'utilisation de secrets dans la mise en œuvre d'un service transactionnel, selon un mode de réalisation particulier adressé plus en détails par la suite, le système d'autorisation de transaction 160 fournit au terminal mobile 100 au moins une clef de session à durée de vie limitée, c'est-à-dire au moins une clef de chiffrement symétrique à durée de vie limitée, pour permettre au terminal mobile 100 de générer une signature que ledit terminal mobile 100 fournit à l'équipement 130 dans le cadre de la transaction, la signature faisant alors office de données de sécurisation dérivées du secret que représente la clé de session utilisée. Ayant connaissance de la clef de session à durée de vie limitée dont est dérivée la signature, le système d'autorisation de transaction 160 est alors en mesure d'authentifier la signature, et d'autoriser ou pas la transaction auprès de l'équipement 130.

Etant donné que la connaissance de tels secrets permet de valider la transaction auprès du système d'autorisation de transaction 160, il est important de pouvoir assurer qu'une application malicieuse ne puisse pas acquérir à volonté de tels secrets dans le but de permettre à un autre terminal mobile de réaliser des transactions en se faisant passer pour le terminal mobile 100.

Le terminal mobile 100 est équipé d'une technologie de communication sans-fil permettant d'effectuer des transactions, et donc d'échanger des données, avec l'équipement 130. Cette technologie de communication sans-fil est préférentiellement telle que, lorsque le terminal mobile 100 est approché à faible distance (de l'ordre de quelques centimètres ou dizaines de centimètres) de l'équipement 130, le terminal mobile 100 et l'équipement 130 sont aptes à échanger des données et tenter d'effectuer la transaction. Selon un exemple privilégié, cette technologie de communication sans-fil est de type communication en champ proche NFC et permet des transmissions selon le protocole décrit dans la norme ISO/IEC 14443-4. Cette capacité de communication sans-fil entre le terminal mobile 100 et l'équipement 130 est représentée par une double flèche en pointillés sur la Fig. 1A.

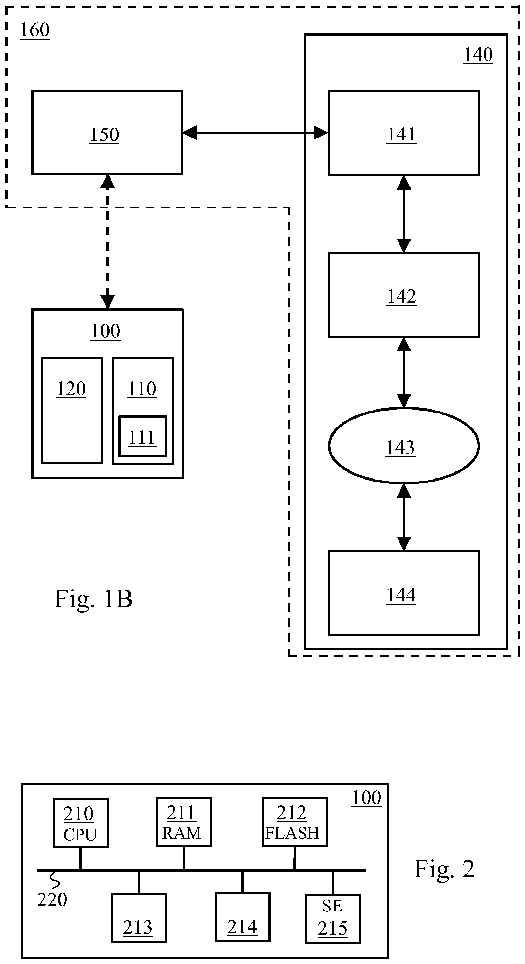

Le terminal mobile 100 est en outre équipé d'une application logicielle 120 adaptée pour permettre au terminal mobile 100 d'interagir avec son environnement dans le cadre du service transactionnel, comme par exemple d'interagir avec l'utilisateur. Un exemple d'architecture matérielle du terminal mobile 100 permettant la mise en œuvre d'un système d'exploitation OS au dessus duquel l'application logicielle 120 peut être lancée est détaillé ci-après en relation avec la Fig. 2.

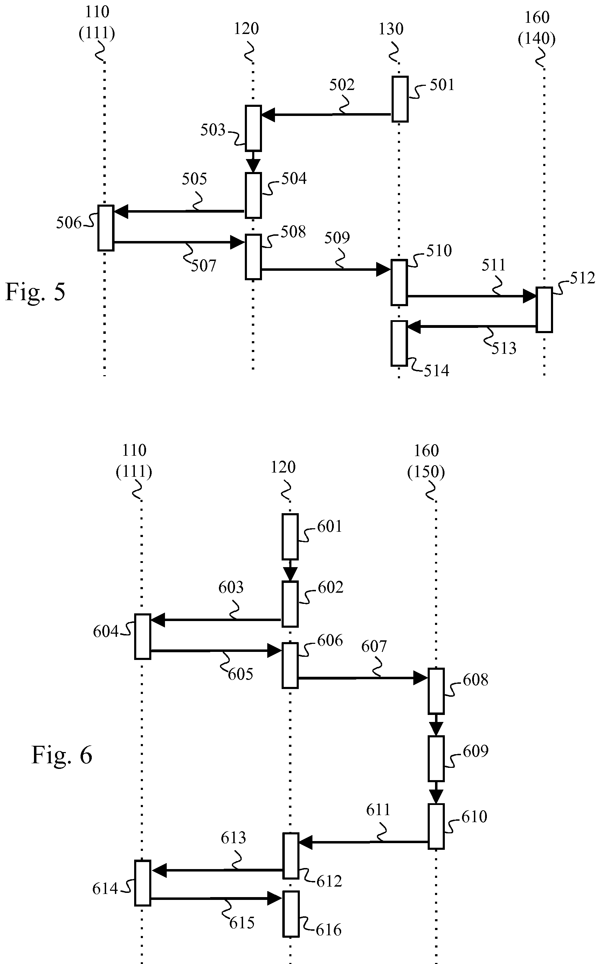

L'application logicielle 120 est en outre adaptée pour coordonner les interactions du terminal mobile 100 avec l'équipement 130 dans le cadre de la mise en œuvre du service transactionnel. L'application logicielle 120 est en outre adaptée pour interagir avec un élément de sécurité SE 110 pour renforcer la sécurité de données dans le cadre de la mise en œuvre du service transactionnel. Cet aspect est détaillé ci-après en relation avec la Fig. 5.

L'élément de sécurité SE 110 est un élément matériel qui est, soit directement intégré dans le terminal mobile 100 (on parle alors d'élément de sécurité embarqué (« Embedded Secure Element » en anglais)), soit un élément matériel que l'utilisateur peut insérer à volonté dans un lecteur du terminal mobile 100, tel qu'une carte universelle à circuit intégré UICC (« Universal Integrated Circuit Card » en anglais). L'élément de sécurité SE 110 est hermétique en lecture et est réputé être quasiment inviolable, contrairement à d'autres mémoires internes du terminal mobile 100. L'élément de sécurité SE 110 est ainsi adapté pour permettre au terminal mobile 100 de recevoir de manière sécurisée les secrets, et d'assurer qu'un autre terminal mobile ne puisse pas demander des secrets pour le compte du terminal mobile 100. L'élément de sécurité SE 110 est adapté pour interagir avec l'application logicielle 120, en exécutant typiquement une application de sécurisation 111.

Dans un mode de réalisation particulier, tel qu'illustré sur la Fig. 1A, l'équipement 130 est un point d'acceptation de paiement, aussi appelé *point de vente* PoS (« Point of Sale » en anglais) ou *terminal de paiement,* dans le cadre de la mise en œuvre d'un service transactionnel de paiement. Le système d'autorisation de transaction 160 comporte alors un serveur bancaire d'acquisition (« Acquirer Bank Server » en anglais) 144 adapté pour être connecté à une multitude de tels points d'acceptation de paiement, typiquement répartis dans des boutiques dans lesquelles des clients peuvent effectuer des paiements sans contact. Le serveur bancaire d'acquisition 144 est adapté pour valider les règlements effectués par les clients auprès des points d'acceptation de paiement, pour le compte de marchands chez qui lesdits points d'acceptation de paiement ont été installés. Le système d'autorisation de transaction 160 comporte alors en outre un serveur bancaire d'autorisation («Bank Authorisation Server » en anglais) 142, c'est-à-dire un serveur d'une banque auprès de laquelle l'utilisateur du terminal mobile 100 dispose d'un compte bancaire. Le système d'autorisation de transaction 160 comporte alors en outre un réseau - public ou privé - d'échange (« Interchange Network » en anglais) 143, *e.g.* de type Visa ou Mastercard, via lequel le serveur bancaire d'autorisation 142 et le serveur bancaire d'acquisition 144 échangent des données. Le réseau 143 permet ainsi d'interconnecter une multitude de serveurs bancaires d'acquisition et une multitude de serveurs bancaires d'autorisation, de manière à permettre aux serveurs bancaires d'acquisition de vérifier auprès des serveurs bancaires d'autorisation que l'état des comptes bancaires des clients permet de réaliser les transactions initiées auprès des points d'acceptation de paiement.

Le système d'autorisation de transaction 160 comporte alors en outre une plateforme de gestion de paiement sans contact 150 adaptée pour fournir des secrets à des terminaux mobiles d'utilisateurs du service de paiement sans contact.

Le système d'autorisation de transaction 160 comporte alors en outre une plateforme d'autorisation de paiement sans contact 141 qui est adaptée pour autoriser des transactions de paiement sans contact et de faire le relais entre le serveur bancaire d'autorisation 142 et la plateforme de gestion de paiement sans contact 150. La plateforme d'autorisation de paiement sans contact 141 partage les secrets, transmis aux terminaux mobiles, avec la plateforme de gestion de paiement sans contact 150. Le serveur d'autorisation bancaire 142 fait alors appel à la plateforme d'autorisation de paiement sans contact 141 pour valider les données de sécurisation reçues en provenance des points d'acceptation de paiement. La mise en œuvre de la plateforme d'autorisation de paiement sans contact 141 permet de limiter l'impact de mise en œuvre de la présente invention sur les structures transactionnelles bancaires existantes qui permettent de réaliser des paiements par carte bancaire (structure transactionnelle bancaire 140 sur la Fig. 1A), en limitant les modifications comportementales et structurelles au niveau des serveurs bancaires d'autorisation. Les fonctionnalités mises en œuvre par la plateforme d'autorisation de paiement sans contact 141 peuvent toutefois être directement mises en œuvre par le serveur bancaire d'autorisation 142, ou par la plateforme de gestion de paiement sans contact 150 (fusion des fonctionnalités de ces deux plateformes 141 et 150).

La Fig. 1B illustre schématiquement le système mettant en œuvre le service transactionnel présenté en relation avec la Fig. 1A, dans une situation de configuration du service transactionnel.

Pour permettre au système d'autorisation de transaction 160 de se porter garant pour le terminal mobile 100 auprès de l'équipement 130 dans le cadre d'une transaction, le terminal mobile 100 est adapté pour communiquer avec le système d'autorisation de transaction 160 dans une phase de configuration préalable. C'est la situation de la Fig. 1B, qui représente, à l'aide d'une double flèche en pointillés, que le terminal mobile 100 est équipé d'une technologie de communication permettant d'échanger des secrets de manière sécurisée avec le système d'autorisation de transaction 160, et plus particulièrement la plateforme de gestion de paiement sans contact 150 dans le cadre du mode de réalisation particulier du service de paiement sans contact. Cet aspect est détaillé ci-après en relation avec les Figs. 4 et 6.

La technologie de communication entre le terminal mobile 100 et le système d'autorisation de transaction 160 peut être filaire. Par exemple, le terminal mobile 100 peut être équipé d'une interface de type USB (« Universal Serial Bus » en anglais) permettant de connecter le terminal mobile 100 à un ordinateur qui agit en tant que relais via une passerelle Internet avec le système d'autorisation de transaction 160. La technologie de communication entre le terminal mobile 100 et le système d'autorisation de transaction 160 est préférentiellement sans-fil, par exemple de type Wi-Fi selon les standards IEEE 802.11, ou de type UMTS (« Universal Mobile Telecommunications System » en anglais) ou LTE (« Long-Term Evolution » en anglais) selon les standards 3GPP (« 3rd Generation Partnership Project » en anglais).

La Fig. 2 illustre schématiquement un exemple d'architecture matérielle du terminal mobile 100.

Le terminal mobile 100 comporte alors, reliés par un bus de communication 220 : un processeur ou CPU (« Central Processing Unit » en anglais) 210 ; une mémoire vive RAM (« Random Access Memory» en anglais) 211 ; une mémoire morte ROM (« Read Only Memory » en anglais) ou une mémoire morte effaçable électriquement et programmable EEPROM (« Electrically-Erasable Programmable Read-Only Memory» en anglais), par exemple de type Flash 212; une unité de stockage ou un lecteur de support de stockage, tel qu'un lecteur de cartes SD (« Secure Digital » en anglais) ou un disque dur HDD (« Hard Disk Drive » en anglais) 213 ; et un ensemble d'interfaces de communication 214. Le terminal mobile 100 comporte en outre l'élément de sécurité SE 110 (tel que représenté sur les Figs. 1A et 1B) ou un connecteur 215 permettant de connecter l'élément de sécurité SE au terminal mobile 110 (par exemple, dans le cas où l'élément de sécurité SE est une carte universelle à circuit intégré UICC).

Le processeur 210 est capable d'exécuter des instructions chargées dans la RAM 211 à partir de l'EEPROM 212, d'une mémoire externe (non représentée), d'un support de stockage, ou d'un réseau de communication. Lorsque le terminal mobile 100 est mis sous tension, le processeur 210 est capable de lire de la RAM 211 des instructions et de les exécuter. Ces instructions forment un programme d'ordinateur causant la mise en œuvre, par le terminal mobile 100, de tout ou partie des étapes décrites ci-après (en relation avec les Figs. 3 à 6) comme étant effectuées par l'application mobile 120.

Lorsque l'élément de sécurité SE 110 est une carte universelle à circuit intégré UICC, l'élément de sécurité SE comporte un microcontrôleur capable d'exécuter des instructions chargées dans une RAM à partir d'une ROM (dans laquelle sont typiquement stockées des instructions d'un système d'exploitation OS dédié à l'élément de sécurité SE 110) et à partir d'une EEPROM (dans laquelle sont typiquement stockées des instructions applicatives). Lorsque l'élément de sécurité SE 110 est mis sous tension, le processeur est capable de lire de la RAM des instructions et de les exécuter, et notamment d'exécuter les instructions relatives à l'application de sécurisation 111. L'application de sécurisation 111 forme ainsi un programme d'ordinateur causant la mise en œuvre, par l'élément de sécurité SE 110, de tout ou partie des étapes décrites ci-après (en relation avec les Figs. 3 à 6) comme étant effectuées par l'application de sécurisation 111.

La Fig. 3 illustre schématiquement des échanges de messages dans une phase d'initialisation du service transactionnel.

Dans le cadre de la Fig. 3, il est considéré que l'application de sécurisation 111 a été installée au sein de l'élément de sécurité SE 110, et dispose d'une clé publique et d'une clé privée associée, permettant une mise en œuvre de chiffrement asymétrique. La clé publique est stockée dans un certificat signé par un signataire garant de l'authenticité et de la sécurité desdites clés. De telles clés peuvent avoir été générées par un algorithme prédéfini installé au sein de l'élément de sécurité SE 110, ou avoir été chargées lors de la fabrication de l'élément de sécurité SE 110 ou du terminal mobile 100, ou avoir été chargées ultérieurement dans l'élément de sécurité SE 110.

Afin d'initialiser le service transactionnel, l'utilisateur du terminal mobile 100 télécharge l'application logicielle 120 depuis un magasin d'applications en ligne, compatible avec le système d'exploitation installé sur le terminal mobile 100. L'application logicielle 120 peut aussi être installée au moment de la fabrication du terminal mobile 100. L'application logicielle 120 est préférentiellement apte à être mise à jour par le biais du magasin d'applications en ligne, afin de faire bénéficier à l'utilisateur d'améliorations du service transactionnel.

Une fois que l'application logicielle 120 est installée, l'utilisateur peut avoir la possibilité de créer un compte utilisateur auprès du système d'autorisation de transaction 160 pour bénéficier du service transactionnel. Dans ce cadre, l'utilisateur est typiquement amené à choisir un identifiant, un mot de passe d'accès audit compte utilisateur, un code pour s'authentifier lors de certaines transactions,...

Ensuite, dans une étape 301, l'application logicielle 120 démarre l'initialisation effective du terminal mobile 100 vis-à-vis du service transactionnel et cherche alors à se connecter à l'élément de sécurité SE 110, et plus particulièrement, dans un mode de réalisation préférentiel, à l'application de sécurisation 111.

L'application logicielle 120 peut requérir que l'utilisateur du terminal mobile 100 fournisse des données d'identification personnelle permettant d'authentifier que l'utilisateur du terminal mobile 100 est autorisé à effectuer l'initialisation du service transactionnel sur le terminal mobile 100. Selon un mode de réalisation préférentiel, l'application logicielle 120 requiert que l'utilisateur du terminal mobile 100 saisisse un numéro personnel d'identification PIN (« Personal Identification Number » en anglais) connu de l'élément de sécurité SE 110. La gestion de ce numéro personnel d'identification PIN est effectuée de la même manière que pour les cartes SIM (« Subscriber Identity Module » en anglais) en téléphonie mobile, qui, rappelons-le, sont un exemple particulier d'élément de sécurité SE. D'autres moyens d'authentification de l'identité effective de l'utilisateur du terminal mobile 100 peuvent être mis en œuvre, comme par exemple des moyens de reconnaissance biométriques, ou la reproduction sur un écran tactile du terminal mobile 100 d'un geste prédéfini.

Ainsi, dans une étape 302, l'application logicielle 120 transmet alors une requête d'obtention du certificat contenu au sein de l'élément de sécurité SE 110. Cette requête est reçue par l'élément de sécurité SE 110 dans une étape 303, au cours de laquelle l'élément de sécurité SE 110 récupère ledit certificat stocké en mémoire (sécurisée). L'application logicielle 120 peut en outre transmettre aussi les données d'identification personnelle (obtenues précédemment) pour vérification par l'élément de sécurité SE 110, comme par exemple le numéro personnel d'identification PIN saisi par l'utilisateur. Les données d'identification personnelle peuvent être chiffrées par l'application logicielle 120 grâce à une clé de chiffrement de type clé de session connue de l'application logicielle 120 et de l'élément de sécurité SE 110, de manière à éviter qu'une application malicieuse installée sur le terminal mobile 100 puisse obtenir lesdites données d'identification personnelle. Puis, dans une étape 304, l'élément de sécurité SE 110 transmet, en réponse à la requête reçue à l'étape 303, un message contenant ledit certificat. Dans une étape 305, l'application logicielle 120 obtient donc ledit certificat et transmet, dans une étape 306, une requête d'initialisation du service transactionnel à l'attention du système d'autorisation de transaction 160.

En référence à la Fig. 1B, l'application logicielle 120 interagit plus particulièrement avec la plateforme de gestion de paiement sans contact 150.

La requête d'initialisation du service transactionnel contient le certificat obtenu par l'application logicielle 120 dans l'étape 305, ainsi que des informations permettant d'identifier l'application logicielle 120 et le terminal mobile 100, et préférentiellement des informations permettant d'identifier le compte utilisateur associé à l'utilisateur du terminal mobile 100. La requête d'initialisation du service transactionnel est reçue par le système d'autorisation de transaction 160 dans une étape 307, qui obtient alors ledit certificat. Dans une étape 307, le système d'autorisation de transaction 160 vérifie que le certificat reçu est valide. Lorsque le certificat reçu n'est pas valide, le système d'autorisation de transaction 160 retourne un message d'erreur à l'application logicielle 120 et l'initialisation effective du terminal mobile 100 vis-à-vis du service transactionnel est avortée. Sinon, dans une étape 308, le système d'autorisation de transaction 160 obtient, e.g. génère, au moins une clé de signature et/ou de chiffrement associée à l'application logicielle 120 et au terminal mobile 100, et préférentiellement au compte utilisateur associé à l'utilisateur du terminal mobile 100. Préférentiellement, le système d'autorisation de transaction 160 obtient un ensemble de clés (« keyset » en anglais) KS associé à l'application logicielle 120 et au terminal mobile 100, et préférentiellement au compte utilisateur associé à l'utilisateur du terminal mobile 100. Cet ensemble de clés KS est typiquement composé de : une clé de signature de données, une clé de chiffrement de données, et une clé dédiée au chiffrement de clés pendant des phases de rotation des clés. Cet ensemble de clés KS peut aussi être une paire de clés PKI (« Public Key Infrastructure » en anglais). Par la suite, ledit ensemble de clés KS est utilisé, à titre illustratif.

Dans une étape 309, le système d'autorisation de transaction 160 chiffre l'ensemble de clés KS obtenu à l'étape 308 grâce à la clé publique contenue dans le certificat reçu à l'étape 307. Ainsi, l'élément de sécurité SE 110 est seul apte à déchiffrer l'ensemble de clés KS. Le système d'autorisation de transaction 160 transmet alors, dans une étape 310, une réponse à la requête d'initialisation du service transactionnel reçue à l'étape 307. La réponse transmise à l'étape 310 est adressée au terminal 100 et plus particulièrement à l'application logicielle 120, et contient ledit ensemble de clés KS sous forme chiffrée. Cette réponse est reçue par l'application logicielle 120 dans une étape 311, qui peut alors en extraire ledit ensemble de clés KS sous forme chiffrée.

Dans une étape 312, l'application logicielle 120 transmet ledit ensemble de clés KS sous forme chiffrée à l'élément de sécurité SE 110 et plus particulièrement, dans un mode de réalisation préférentiel, à l'application de sécurisation 111. Ledit ensemble de clés KS sous forme chiffrée est alors reçu par l'élément de sécurité SE 110 dans une étape 313, au cours de laquelle l'élément de sécurité SE 110 déchiffre l'ensemble de clés KS grâce à la clé privée associée à la clé publique qui était contenue dans le certificat transmis par l'élément de sécurité SE 110 à l'étape 304. L'élément de sécurité SE 110 stocke alors hermétiquement en mémoire ledit ensemble de clés KS. Par définition de l'élément de sécurité SE 110, ledit ensemble de clés KS ne peut pas « sortir » de l'élément de sécurité SE 110, et ne peut être qu'utilisé pour des opérations de chiffrement et/ou de signatures, ou être remplacé. L'application 120, ou toute autre application installée sur le terminal mobile 100, n'a donc pas accès audit ensemble de clés KS. Ledit ensemble de clés KS est destiné à permettre au terminal mobile 100 de recevoir, et éventuellement de stocker, de manière sécurisée des secrets, tels que des clés de session, de la part du système d'autorisation de transaction 160, tel que décrit ci-après en relation avec les Figs. 4 et 6.

Une alternative à l'algorithme de la Fig. 3 est que le système d'autorisation de transaction 160 et l'élément de sécurité SE 110 partagent par configuration, e.g. en production, ledit ensemble de clés KS.

La Fig. 4 illustre schématiquement des échanges de messages dans une phase de récupération de secrets pour une mise en œuvre du service transactionnel.

Avant de pouvoir effectuer toute transaction dans le cadre du service transactionnel, le terminal mobile 100 doit récupérer des secrets, tels que des clés de session, auprès du système d'autorisation de transaction 160. Le déclenchement de l'algorithme de la Fig. 4 est à l'initiative de l'application logicielle 120 et fait typiquement suite à l'algorithme de la Fig. 3. Le déclenchement de l'algorithme de la Fig. 4 peut être à l'initiative de l'utilisateur du terminal mobile 100 via une interface homme-machine de l'application logicielle 120. En variante, la récupération de secrets par le terminal mobile 100 est à l'initiative du système d'autorisation de transaction 160, et plus particulièrement de la plateforme de gestion de paiement sans contact 150.

Dans une étape 401, l'application logicielle 120 détecte que des secrets doivent être récupérés auprès du système d'autorisation de transaction 160 pour la mise en œuvre du service transactionnel.

Dans une étape 402 optionnelle, l'application logicielle 120 requiert que l'utilisateur du terminal mobile 100 fournisse des données d'identification personnelle permettant d'authentifier que l'utilisateur du terminal mobile 100 est autorisé à interagir dans le cadre du service transactionnel, e.g. un numéro personnel d'identification PIN, tel que déjà décrit en relation avec la Fig. 3.

L'application logicielle 120 prépare ensuite une requête de récupération de secrets destinée à être envoyée au système d'autorisation de transaction 160 et contenant des informations permettant d'identifier l'application logicielle 120 et le terminal mobile 100, et préférentiellement des informations permettant d'identifier le compte utilisateur associé à l'utilisateur du terminal mobile 100. De manière à sécuriser l'envoi de ladite requête, la requête de récupération de secrets doit être signée et/ou chiffrée à l'aide de la clé correspondante de l'ensemble de clés KS tel que stocké dans le cadre de l'algorithme de la Fig. 3. L'application logicielle 120 cherche alors à se connecter à l'élément de sécurité SE 110, et plus particulièrement, dans un mode de réalisation préférentiel, à l'application de sécurisation 111. Ainsi, dans une étape 403, l'application logicielle 120 transmet une requête de signature et/ou de chiffrement de la requête de récupération de secrets. L'application logicielle 120 peut transmettre aussi les données d'identification personnelle (obtenues à l'étape 402) pour vérification par l'élément de sécurité SE 110, comme par exemple le numéro personnel d'identification PIN saisi par l'utilisateur. Comme dans le cadre de la Fig. 3, les données d'identification personnelle peuvent être chiffrées par l'application logicielle 120. La requête de signature et/ou de chiffrement est alors reçue par l'élément de sécurité SE 110 dans une étape 404, au cours de laquelle l'élément de sécurité SE 110 appose une signature et/ou un chiffrement à la requête de récupération de secrets grâce à la clé correspondante dudit ensemble de clés KS, après vérification éventuelle desdites données d'identification personnelle.

Il est possible de combiner les mécanismes de signature et de chiffrement, c'est-à-dire d'apposer une signature à ladite requête, puis de chiffrer une partie de ladite requête, et notamment ladite signature apposée. Il est aussi possible d'appliquer les mécanismes de signature et de chiffrement indépendamment l'un de l'autre, ou l'un sans l'autre.

Il est préférable qu'au sein de l'élément de sécurité SE 110 les données d'identification personnelle identifiant quel utilisateur est autorisé à utiliser le service transactionnel soient associées avec un identifiant de l'application logicielle 120 et/ou avec ledit ensemble de clés KS. Cela permet à l'élément de sécurité SE 110 de n'apposer de signature et/ou de chiffrement à un message que lorsque les données d'identification personnelle fournies par l'utilisateur coïncident avec des données d'identification personnelle préalablement obtenues par l'application logicielle 120 auprès de l'utilisateur légitime du terminal mobile 100 lors de la phase d'initialisation et stockées par l'élément de sécurité SE 110. Cela permet de gérer indépendamment des applications logicielles dédiées à des services transactionnels distincts. Les applications logicielles installées sur un terminal mobile disposent en effet de signatures respectives. Ces signatures sont générées par une infrastructure de l'organisme ayant commercialisé l'application logicielle, et il est par conséquent possible d'identifier toute application avec le certificat ayant servi à sa signature. Un hash de ce certificat (ou le certificat lui-même) peut être stocké dans l'élément de sécurité SE 110 dans une phase de configuration préalable, comme par exemple lors de l'exécution de l'algorithme de la Fig. 3. La récupération des données d'identification personnelle identifiant quel utilisateur est autorisé à utiliser le service transactionnel peut aussi être effectuée à ce moment-là. Cette phase de configuration préalable peut être mise en œuvre par l'application logicielle 120 ou par le système d'exploitation du terminal mobile 100.

La signature apposée par l'élément de sécurité SE 110 peut être une signature ajoutée à une signature déjà présente dans la requête de récupération de secrets, voire une sur-signature d'une signature déjà présente dans la requête de récupération de secrets.

Puis, dans une étape 405, l'élément de sécurité SE 110 transmet, en réponse à la requête de signature reçue à l'étape 404, un message contenant la requête de récupération de secrets signée et/ou chiffrée. La requête de récupération de secrets signée et/ou chiffrée est ainsi reçue par l'application logicielle 120 dans une étape 406, et transférée par l'application logicielle 120 au système d'autorisation de transaction 160 dans une étape 407.

En référence à la Fig. 1B, l'application logicielle 120 interagit plus particulièrement avec la plateforme de gestion de paiement sans contact 150.

La requête de récupération de secrets signée et/ou chiffrée est alors reçue par le système d'autorisation de transaction 160 dans une étape 408 au cours de laquelle le système d'autorisation de transaction 160 vérifie que la requête de récupération de secrets est authentique, c'est-à-dire que ladite requête correspond bien à l'ensemble de clés KS associé aux informations permettant d'identifier l'application logicielle 120 et le terminal mobile 100, et préférentiellement aux informations permettant d'identifier ledit compte utilisateur. En d'autres termes, grâce à une connaissance de l'ensemble de clés KS, le système d'autorisation de transaction 160 vérifie que la signature apposée et/ou le chiffrement apposé correspond bien audit ensemble de clés KS. Lorsque la requête de récupération de secrets n'est pas authentique, le système d'autorisation de transaction 160 retourne un message d'erreur à l'application logicielle 120 et la récupération de secrets est stoppée. Sinon, dans une étape 409, le système d'autorisation de transaction 160 obtient, e.g. génère, au moins un secret à durée de vie limitée associé à l'application logicielle 120 et au terminal mobile 100, et préférentiellement au compte utilisateur associé à l'utilisateur du terminal mobile 100.

Dans une étape 410, le système d'autorisation de transaction 160 prépare un message de réponse à la requête reçue à l'étape 408, ledit message de réponse contenant chaque secret obtenu à l'étape 409, et signe ledit message de réponse grâce à la clé correspondante de l'ensemble de clés KS associé aux informations permettant d'identifier l'application logicielle 120 et le terminal mobile 100, et préférentiellement aux informations permettant d'identifier ledit compte utilisateur. Préférentiellement, le système d'autorisation de transaction 160 chiffre en outre ledit message de réponse grâce à la clé correspondante de l'ensemble de clés KS (*e.g.* la clé de chiffrement), et plus particulièrement chaque secret à durée de vie limitée, de manière à renforcer la sécurité du service transactionnel.

Dans une étape 411, le système d'autorisation de transaction 160 transmet alors le message de réponse préparé à l'étape 410. Le message de réponse transmis à l'étape 411 est adressé au terminal 100 et plus particulièrement à l'application logicielle 120. Ce message de réponse est reçu par l'application logicielle 120 dans une étape 412, qui transfert alors ledit message de réponse à l'élément de sécurité SE 110 et plus particulièrement, dans un mode de réalisation préférentiel, à l'application de sécurisation 111. Ledit message est alors reçu par l'élément de sécurité SE 110 dans une étape 414, au cours de laquelle l'élément de sécurité SE 110 vérifie que la signature apposée sur ledit message de réponse est valide et correspond bien audit ensemble de clés KS stocké par l'élément de sécurité SE 110. Lorsque ledit message de réponse a été chiffré grâce à la clé correspondante dudit ensemble de clés KS, l'élément de sécurité SE 110 déchiffre en outre ledit message de réponse.

Dans une étape 415, l'élément de sécurité SE 110 transmet à l'application logicielle 120 le résultat de la vérification de la signature apposée sur ledit message de réponse reçu à l'étape 412. Lorsque ledit message de réponse a été chiffré grâce à la clé correspondante dudit ensemble de clés KS, l'élément de sécurité SE 110 transmet en outre, à l'application logicielle 120, chaque secret contenu dans ledit message de réponse. L'application logicielle 120 reçoit ledit résultat, et éventuellement chaque secret après déchiffrement, dans une étape 416. L'application logicielle 120 stocke alors en mémoire du terminal mobile 100 chaque secret ainsi reçu, afin de permettre une mise en œuvre ultérieure d'au moins une transaction, tel que décrit ci-après en relation avec la Fig. 5. Chaque secret étant ainsi stocké en mémoire du terminal mobile 100, une application malicieuse installée sur le terminal mobile 100 pourrait copier la mémoire du terminal mobile 100 et ainsi obtenir lesdits secrets dans le but de permettre à un autre terminal mobile de réaliser des transactions en se faisant passer pour le terminal mobile 100. Chaque secret ainsi reçu ayant cependant une durée de vie limitée, il est évité qu'une telle application malicieuse puisse acquérir à volonté de tels secrets dans le but de permettre à un autre terminal mobile de réaliser des transactions en se faisant passer pour le terminal mobile 100, puisque l'obtention desdits secrets passe par le concours de l'élément de sécurité SE 110.

Dans une variante de réalisation, l'élément de sécurité SE 110 transmet à l'application logicielle 120 le résultat de la vérification de la signature apposée sur ledit message de réponse reçu à l'étape 412 et n'effectue le déchiffrement de chaque secret que lorsque l'application logicielle 120 a besoin d'utiliser ledit secret, comme détaillé par la suite en relation avec la Fig. 5.

La Fig. 5 illustre schématiquement des échanges de messages dans le cadre d'une utilisation desdits secrets au sein d'une transaction entre le terminal mobile 100 et l'équipement 130. L'algorithme de la Fig. 5 fait suite à l'algorithme de la Fig. 4.

Dans une étape 501, l'équipement 130 détecte avoir besoin que le terminal mobile 100 soit authentifié dans le cadre de ladite transaction.

Dans une étape 502, l'équipement 130 transmet au terminal mobile 100, et plus particulièrement à l'application logicielle 120, une demande d'authentification. La demande d'authentification peut contenir des informations relatives à ladite transaction, comme par exemple un montant de paiement à réaliser. La demande d'authentification est reçue par l'application logicielle 120 dans une étape 503, dans laquelle l'application logicielle 120 peut effectuer des premières vérifications concernant la transaction : disponibilité des secrets, expiration des secrets, caractéristiques de transactions (e.g. montant de paiement) compatibles avec les secrets détenus et/ou nécessitant une identification de l'utilisateur effectif du terminal mobile 100, conditions d'utilisation (position géographique d'utilisation, tranche horaire d'utilisation),...

Dans une étape 504 optionnelle, l'application logicielle 120 requiert que l'utilisateur du terminal mobile 100 fournisse des données d'identification personnelle, e.g. saisisse un numéro personnel d'identification PIN, comme déjà décrit en relation avec les Figs. 3 et 4.

L'application logicielle 120 prépare ensuite une réponse à la demande d'authentification reçue à l'étape 503, qui est destinée à être envoyée à l'équipement 130. Ladite réponse contient au moins un secret reçu du système d'autorisation de transaction 160, comme précédemment décrit en relation avec la Fig. 4, ou des informations dérivées d'au moins un tel secret. Ladite réponse contient en outre des informations permettant d'identifier l'application logicielle 120 et le terminal mobile 100, et préférentiellement des informations permettant d'identifier le compte utilisateur associé à l'utilisateur du terminal mobile 100.

Par exemple, dans le cadre d'un service de paiement sans contact, les secrets sont des clés de sessions à durée de vie limitée, et l'application logicielle 120 génère, grâce à ces clés de sessions, des signatures que l'application logicielle 120 insère respectivement dans les réponses aux demandes d'authentification.

De manière à sécuriser l'envoi de la réponse à la demande d'authentification reçue à l'étape 503, ladite réponse à la demande d'authentification peut être signée et/ou chiffrée par l'élément de sécurité SE 110 à l'aide des clés correspondantes de l'ensemble de clés KS tel que stocké dans le cadre de l'algorithme de la Fig. 3. L'application logicielle 120 cherche alors à se connecter à l'élément de sécurité SE 110, et plus particulièrement, dans un mode de réalisation préférentiel, à l'application de sécurisation 111. Ainsi, dans une étape 505, l'application logicielle 120 transmet une requête de signature et/ou de chiffrement de ladite réponse à la demande d'authentification. L'application logicielle 120 peut transmettre aussi les données d'identification personnelle (obtenues à l'étape 504), pour vérification par l'élément de sécurité SE 110. Comme dans le cadre des Figs. 3 et 4, les données d'identification personnelle peuvent être chiffrées par l'application logicielle 120. La requête de signature est alors reçue par l'élément de sécurité SE 110 dans une étape 506, au cours de laquelle l'élément de sécurité SE 110 appose une signature et/ou un chiffrement à ladite réponse à la demande d'authentification grâce audit ensemble de clés KS, après vérification éventuelle desdites données d'identification personnelle, tel que décrit en relation avec les Figs. 3 et 4. La signature apposée par l'élément de sécurité SE 110 peut être une signature ajoutée à une signature déjà présente dans ladite réponse à la demande d'authentification et insérée dans un champ non encore utilisé des spécifications du réseau d'échange 143, voire être une sur-signature d'une signature déjà présente dans ladite réponse à la demande d'authentification (par chiffrement de la signature déjà présente ou par une opération de OU exclusif entre ces deux signatures par exemple), ou remplacer une signature déjà présente dans ladite réponse à la demande d'authentification.

Puis, dans une étape 507, l'élément de sécurité SE 110 transmet, en réponse à la requête de signature reçue à l'étape 506, un message contenant ladite réponse à la demande d'authentification, signée et/ou chiffrée par l'élément de sécurité SE 110.

Lorsque le service transactionnel est un service de paiement sans contact, la signature de la réponse à la demande d'authentification apposée par l'élément de sécurité SE 110 est préférentiellement apposée dans un champ prédéfini des spécifications du réseau d'échange 143, *e.g.* de type Visa ou Mastercard, via lequel le serveur bancaire d'autorisation 142 et le serveur bancaire d'acquisition 144 échangent des données. Ce champ est par exemple le champ ARQC (« Autorisation Request Cryptogram » dans les spécifications EMV (« Europay MasterCard Visa ») *« Kernel EMV Integrated Circuit Card* - *Spécifications for Payment Systems* - *Book 3 »* et *« EMV - Contactless Spécifications for Payment Systems* - *Book C-3* »*.* Cela permet de limiter l'impact de mise en œuvre de la présente invention sur les structures transactionnelles bancaires existantes qui permettent de réaliser des paiements par carte bancaire (structure transactionnelle bancaire 140 sur la Fig. 1A), en limitant les modifications comportementales et structurelles au niveau des serveurs bancaires d'acquisition.

Dans un mode de réalisation particulier, l'élément de sécurité SE 110 a stocké chaque secret sous forme chiffrée dans le cadre de l'algorithme de la Fig. 4 et n'effectue le déchiffrement de chaque secret que lorsque l'application logicielle 120 a besoin d'utiliser ledit secret. L'application logicielle 120 demande alors, préalablement à l'envoi de ladite requête de signature et/ou de chiffrement à l'élément de sécurité SE 110, que l'élément de sécurité SE 110 fournisse un dit secret. L'élément de sécurité SE 110 déchiffre alors un dit secret, et transmet ledit secret déchiffré à l'application logicielle 120, afin de permettre à l'application logicielle 120 de préparer la réponse à la demande d'authentification reçue à l'étape 503.

Ladite réponse à la demande d'authentification est ainsi reçue par l'application logicielle 120 dans une étape 508, et transférée par l'application logicielle 120 à l'équipement 130 dans une étape 509. L'équipement 130 reçoit donc, dans une étape 510, une réponse à la demande d'authentification que l'équipement 130 avait émise à l'étape 502. L'équipement 130 va alors chercher à faire valider l'authenticité de ladite réponse auprès du système d'autorisation de transaction 160, au moins grâce à chaque secret contenu dans ladite réponse ou aux informations dérivées d'au moins un tel secret contenues dans ladite réponse.

En référence à la Fig. 1A, l'équipement 130 interagit plus particulièrement avec le serveur bancaire d'acquisition 144.

Dans une étape 511, l'équipement 130 transfère au système d'autorisation de transaction 160 la réponse à la demande d'authentification, que l'équipement 130 a reçue à l'étape 510. Ladite réponse est alors reçue par le système d'autorisation de transaction 160 dans une étape 512 au cours de laquelle le système d'autorisation de transaction 160 vérifie l'authenticité de ladite réponse.

Le système d'autorisation de transaction 160 vérifie que chaque secret contenu dans ladite réponse à la demande d'authentification correspond à un secret valide effectivement envoyé précédemment à l'application logicielle 120 installée sur le terminal mobile 100, à partir des informations permettant d'identifier l'application logicielle 120 et le terminal mobile 100 contenues dans ladite réponse à la demande d'authentification, et préférentiellement à partir des informations permettant d'identifier le compte utilisateur associé à l'utilisateur du terminal mobile 100. Le système d'autorisation de transaction 160 vérifie notamment que chaque secret contenu dans ladite réponse à la demande d'authentification n'a pas expiré. Il en va de même sur la base des informations dérivées d'au moins un secret, lorsque ladite réponse à la demande d'authentification contient de telles informations dérivées d'au moins un secret.

Le système d'autorisation de transaction 160 peut en outre vérifier que des informations détenues par ledit système d'autorisation de transaction 160 vis-à-vis dudit compte utilisateur autorisent la transaction, e.g. que le compte bancaire de l'utilisateur est suffisamment crédité dans le cadre d'un service de paiement sans contact. Dans le cadre du service de paiement sans contact, cette vérification est typiquement effectuée par le serveur bancaire d'autorisation 142.

Lorsque ladite réponse à la demande d'authentification a été signée et/ou chiffrée par l'élément de sécurité SE 110, le système d'autorisation de transaction 160 vérifie en outre que la signature et/ou le chiffrement correspondant est valide et correspond bien à l'ensemble de clés KS associé aux informations permettant d'identifier l'application logicielle 120 et le terminal mobile 100, et préférentiellement aux informations permettant d'identifier ledit compte utilisateur. Le système d'autorisation de transaction 160 peut vérifier la validité d'un chiffrement en vérifiant qu'une information prédéfinie attendue (e.g. une signature prédéfinie ou un code prédéfini) est bien retrouvée après déchiffrement grâce à la clé correspondante dudit ensemble de clés KS.

Lorsque la signature et/ou le chiffrement est considéré comme non valide lors d'au moins une des vérifications énoncées précédemment, le système d'autorisation de transaction 160 retourne un message d'erreur à l'équipement 130 et la transaction est avortée. Sinon, dans une étape 513, le système d'autorisation de transaction 160 retourne à l'équipement 130 un message d'autorisation d'effectuer la transaction. Ledit message est alors reçu par l'équipement 130 dans une étape 514. L'équipement 130 peut alors éventuellement continuer des échanges avec le terminal mobile 100 et plus particulièrement avec l'application logicielle 120, par exemple pour signifier que le système d'autorisation de transaction 160 a autorisé la transaction.

La Fig. 6 illustre schématiquement des échanges de messages dans le cadre d'une mise à jour des secrets fournis par le système d'autorisation de transaction 160 au terminal mobile 100, pour une nouvelle mise en œuvre du service transactionnel.

En effet, comme déjà précisé, les secrets fournis par le système d'autorisation de transaction 160 au terminal mobile 100 ont une durée de vie limitée. Il est alors nécessaire de les renouveler, soit parce que lesdits secrets ont été utilisés et ne peuvent plus l'être, soit parce que lesdits secrets sont périmés. Le déclenchement de l'algorithme de la Fig. 6 est à l'initiative de l'application logicielle 120. Le déclenchement de l'algorithme de la Fig. 6 peut être à l'initiative de l'utilisateur du terminal mobile 100 via une interface homme-machine de l'application logicielle 120, par exemple suite à une indication de l'application logicielle 120 via ladite interface homme-machine que lesdits secrets sont à renouveler. En variante, la récupération de secrets est à l'initiative du système d'autorisation de transaction 160, et plus particulièrement de la plateforme de gestion de paiement sans contact 150.

Dans une étape 601, l'application logicielle 120 détecte que des secrets doivent être renouvelés auprès du système d'autorisation de transaction 160 pour permettre de continuer la mise en œuvre du service transactionnel.

Dans une étape 602 optionnelle, l'application logicielle 120 requiert que l'utilisateur du terminal mobile 100 fournisse des données d'identification personnelle, comme décrit précédemment en relation avec les Figs 3, 4 et 5.

L'application logicielle 120 prépare ensuite une requête de renouvellement de secrets destinée à être envoyée au système d'autorisation de transaction 160 et contenant des informations permettant d'identifier l'application logicielle 120 et le terminal mobile 100, et préférentiellement des informations permettant d'identifier le compte utilisateur associé à l'utilisateur du terminal mobile 100.

De manière à sécuriser l'envoi de ladite requête, la requête de renouvellement de secrets doit être signée et/ou chiffrée à l'aide de l'ensemble de clés KS tel que stocké dans le cadre de l'algorithme de la Fig. 3. L'application logicielle 120 cherche alors à se connecter à l'élément de sécurité SE 110, et plus particulièrement, dans un mode de réalisation préférentiel, à l'application de sécurisation 111. Ainsi, dans une étape 603, l'application logicielle 120 transmet une requête de signature et/ou de chiffrement de la requête de renouvellement de secrets. L'application logicielle 120 peut transmettre aussi les données d'identification personnelles fournies par l'utilisateur, pour vérification par l'élément de sécurité SE 110. Comme dans le cadre des Figs. 3, 4 et 5, les données d'identification personnelle peuvent être chiffrées par l'application logicielle 120. La requête de signature et/ou de chiffrement est alors reçue par l'élément de sécurité SE 110 dans une étape 604, au cours de laquelle l'élément de sécurité SE 110 appose une signature et/ou un chiffrement à la requête de renouvellement de secrets grâce audit ensemble de clés KS, après vérification éventuelle desdites données d'identification personnelle comme décrit précédemment en relation avec les Figs 3, 4 et 5. La signature apposée par l'élément de sécurité SE 110 peut être une signature ajoutée à une signature déjà présente dans la requête de renouvellement de secrets, voire une sur-signature d'une signature déjà présente dans la requête de renouvellement de secrets.

Puis, dans une étape 405, l'élément de sécurité SE 110 transmet, en réponse à la requête de signature et/ou de chiffrement reçue à l'étape 404, un message contenant la requête de renouvellement de secrets signée et/ou chiffrée. La requête de renouvellement de secrets signée et/ou chiffrée est ainsi reçue par l'application logicielle 120 dans une étape 606, et transférée par l'application logicielle 120 au système d'autorisation de transaction 160 dans une étape 607.

En référence à la Fig. 1B, l'application logicielle 120 interagit plus particulièrement avec la plateforme de gestion de paiement sans contact 150.

La requête de renouvellement de secrets signée et/ou chiffrée est alors reçue par le système d'autorisation de transaction 160 dans une étape 608 au cours de laquelle le système d'autorisation de transaction 160 vérifie que la requête de récupération de secrets est authentique et correspond bien à l'ensemble de clés KS associé aux informations permettant d'identifier l'application logicielle 120 et le terminal mobile 100, et préférentiellement aux informations permettant d'identifier ledit compte utilisateur. En d'autres termes, grâce à une connaissance de l'ensemble de clés KS, le système d'autorisation de transaction 160 vérifie que la signature apposée et/ou le chiffrement apposé correspond bien audit ensemble de clés KS. Lorsque la requête de récupération de secrets n'est pas authentique, le système d'autorisation de transaction 160 retourne un message d'erreur à l'application logicielle 120 et le renouvellement de secrets échoue. Sinon, dans une étape 609, le système d'autorisation de transaction 160 obtient, e.g. génère, au moins un secret à durée de vie limitée associé à l'application logicielle 120 et au terminal mobile 100, et préférentiellement au compte utilisateur associé à l'utilisateur du terminal mobile 100.

Dans une étape 610, le système d'autorisation de transaction 160 prépare un message de réponse à la requête reçue à l'étape 608, ledit message de réponse contenant chaque secret obtenu à l'étape 609, et signe ledit message de réponse grâce à la clé correspondante de l'ensemble de clés KS associé aux informations permettant d'identifier l'application logicielle 120 et le terminal mobile 100, et préférentiellement aux informations permettant d'identifier ledit compte utilisateur. Préférentiellement, le système d'autorisation de transaction 160 chiffre ledit message de réponse grâce à la clé correspondante de l'ensemble de clés KS, de manière à renforcer la sécurité du service transactionnel.

Dans une étape 611, le système d'autorisation de transaction 160 transmet alors le message de réponse préparé à l'étape 610. Le message de réponse transmis à l'étape 611 est adressé au terminal 100 et plus particulièrement à l'application logicielle 120. Ce message de réponse est reçu par l'application logicielle 120 dans une étape 612. L'application logicielle 120 transfert alors ledit message de réponse à l'élément de sécurité SE 110 et plus particulièrement, dans un mode de réalisation préférentiel, à l'application de sécurisation 111. Ledit message est alors reçu par l'élément de sécurité SE 110 dans une étape 614, au cours de laquelle l'élément de sécurité SE 110 vérifie que la signature apposée sur ledit message de réponse est valide et correspond bien audit ensemble de clés KS stocké par l'élément de sécurité SE 110. Lorsque ledit message de réponse a été chiffré grâce à la clé correspondante de l'ensemble de clés KS, l'élément de sécurité SE 110 déchiffre en outre ledit message de réponse grâce à la clé correspondante de l'ensemble de clés KS.

Dans une étape 615, l'élément de sécurité SE 110 transmet à l'application logicielle 120 le résultat de la vérification de la signature apposée sur ledit message de réponse reçu à l'étape 612. Lorsque ledit message de réponse a été chiffré grâce à la clé correspondante de l'ensemble de clés KS, l'élément de sécurité SE 110 transmet en outre, à l'application logicielle 120, chaque secret contenu dans ledit message de réponse. L'application logicielle 120 reçoit ledit résultat, et éventuellement chaque secret après déchiffrement, dans une étape 616. L'application logicielle 120 stocke alors en mémoire du terminal mobile 100 chaque secret ainsi reçu, afin de permettre une mise en œuvre ultérieure d'au moins une nouvelle transaction, tel que déjà décrit en relation avec la Fig. 5.

Dans une variante de réalisation, l'élément de sécurité SE 110 transmet à l'application logicielle 120 le résultat de la vérification de la signature apposée sur ledit message de réponse reçu à l'étape 612 et n'effectue le déchiffrement de chaque secret renouvelé que lorsque l'application logicielle 120 a besoin d'utiliser ledit secret, comme détaillé précédemment en relation avec la Fig. 5.

## Revendications

1. Procédé de transmission d'au moins un secret destiné à être utilisé dans un service transactionnel pour réaliser une transaction entre un terminal mobile (100) et un équipement (130), le terminal mobile exécutant une application logicielle (120) destinée à permettre au terminal mobile d'interagir dans le cadre du service transactionnel, le terminal mobile intégrant ou étant connecté à un élément de sécurité (110) stockant hermétiquement au moins une première clé de signature et/ou de chiffrement, le procédé étant tel que, lors d'une phase de récupération du ou des secrets :
- l'application logicielle prépare (402) une requête de récupération du ou des secrets destinée à être envoyée à un système d'autorisation de transaction (160) ;
- l'application logicielle instruit (403) l'élément de sécurité d'apposer une signature et/ou un chiffrement à ladite requête préparée, à l'aide d'au moins une dite première clé, et transmet (407) au système d'autorisation de transaction ladite requête signée et/ou chiffrée ;
- le système d'autorisation de transaction transmet (411) à l'application logicielle ledit ou lesdits secrets, après vérification (408), grâce à une connaissance de chaque dite première clé, que ladite requête signée et/ou chiffrée est authentique ;
et, pour effectuer la transaction, l'application logicielle transmet (509) à l'équipement ledit ou lesdits secrets ou des informations dérivées dudit ou desdits secrets,
où le ou lesdits secrets sont à durée de vie limitée, le ou les secrets sont stockés par l'application logicielle dans une mémoire du terminal mobile et où le système d'autorisation de transaction valide la transaction grâce audit ou auxdits secrets à durée de vie limitée, ou aux informations dérivées dudit ou desdits secrets à durée de vie limitée, et où l'élément de sécurité dispose d'une seconde clé, publique, contenue dans un certificat et d'une troisième clé, privée, permettant une mise en œuvre de chiffrement asymétrique, et, lors d'une phase préalable d'initialisation :
- l'application logicielle obtient (305) ledit certificat auprès de l'élément de sécurité ;
- l'application logicielle transmet (306) au système d'autorisation de transaction une requête d'initialisation du service transactionnel contenant le certificat obtenu, ainsi que des informations permettant d'identifier l'application logicielle et le terminal mobile ;
- le système d'autorisation de transaction transmet (310) à l'application logicielle chaque dite première clé sous forme chiffrée à l'aide de ladite seconde clé contenue dans le certificat reçu, en réponse à ladite requête d'initialisation du service transactionnel ; et
- l'application logicielle fournit (312) à l'élément de sécurité chaque dite première clé reçue sous forme chiffrée, afin de permettre à l'élément de sécurité de déchiffrer (313) chaque dite première clé grâce à ladite troisième clé.

2. Procédé selon la revendication 1, **caractérisé en ce que** le système d'autorisation de transaction transmet à l'application logicielle ledit ou lesdits secrets à durée de vie limitée sous forme chiffrée à l'aide d'au moins une dite première clé, et **en ce que** l'application instruit (413) l'élément de sécurité de déchiffrer ledit ou lesdits secrets à durée de vie limitée reçus sous forme chiffrée.

3. Procédé selon la revendication 1, **caractérisé en ce que**, lors de la phase d'initialisation :
- l'application logicielle requiert que l'utilisateur du terminal mobile fournisse des premières données d'identification personnelle ;
- l'application logicielle transmet à l'élément de sécurité les premières données d'identification personnelle, afin de permettre à l'élément de sécurité de stocker les premières données d'identification personnelle transmises, en association avec un identifiant de l'application logicielle et/ou avec chaque dite première clé ;
et, pour faire apposer une signature et/ou un chiffrement sur un message par l'élément de sécurité :
- l'application logicielle requiert que l'utilisateur du terminal mobile fournisse des secondes données d'identification personnelle ;
- l'application logicielle transmet à l'élément de sécurité les secondes données d'identification personnelle, afin de permettre à l'élément de sécurité de n'apposer la signature que lorsque les premières et secondes données d'identification personnelle coïncident.

4. Procédé selon l'une quelconque des revendications 1 à 3, **caractérisé en ce que**, pour effectuer la transaction,
- l'application logicielle reçoit de l'équipement une demande d'authentification ;
- l'application logicielle prépare une réponse à la demande d'authentification reçue et instruit l'élément de sécurité d'apposer une signature et/ou un chiffrement, à l'aide d'au moins une dite première clé, à ladite réponse préparée, et transmet à l'équipement ladite réponse signée et/ou chiffrée, afin de permettre à l'équipement de valider la transaction auprès du système d'autorisation de transaction en outre grâce à ladite signature et/ou audit chiffrement.

5. Procédé selon la revendication 4, **caractérisé en ce que** la signature apposée par l'élément de sécurité à ladite réponse préparée est parmi le groupe suivant :
- une signature ajoutée à une signature déjà présente dans ladite réponse préparée ;
- une sur-signature d'une signature déjà présente dans ladite réponse préparée, par chiffrement de la signature déjà présente ;
- une sur-signature d'une signature déjà présente dans ladite réponse préparée, par une opération de OU exclusif entre les deux signatures ; et
- une signature de remplacement d'une signature déjà présente dans ladite réponse préparée.

6. Procédé selon l'une des revendications 4 et 5, **caractérisé en ce que**, le service transactionnel étant un service de paiement sans contact, la signature est apposée par l'élément de sécurité dans un champ appelé Autorisation Request Cryptogram dans les spécifications Europay MasterCard Visa.

7. Procédé selon l'une quelconque des revendications 1 à 6, **caractérisé en ce que**, lorsque l'application logicielle détecte (601) que ledit ou lesdits secrets sont à renouveler :
- l'application logicielle prépare (602) une requête de renouvellement du ou des secrets à durée de vie limitée destinée à être envoyée au système d'autorisation de transaction ;
- l'application logicielle instruit (603) l'élément de sécurité d'apposer une signature et/ou un chiffrement, à l'aide d'au moins une dite première clé, à ladite requête préparée, et transmet (607) au système d'autorisation de transaction ladite requête signée et/ou chiffrée ; et
- le système d'autorisation de transaction transmet (611) à l'application logicielle un nouveau ou des nouveaux secrets à durée de vie limitée, après vérification (609), grâce à une connaissance de chaque dite première clé, que ladite requête signée et/ou chiffrée est authentique.

8. Procédé selon l'une quelconque des revendications 1 à 7, **caractérisé en ce que** le service transactionnel est un service de paiement bancaire sans contact, le terminal mobile est un téléphone intelligent et l'équipement est un point d'acceptation de paiement, le terminal mobile et l'équipement communiquant par communications en champ proche.

9. Terminal mobile (100) adapté pour réaliser une transaction avec un équipement (130) dans un service transactionnel, le terminal mobile étant adapté pour recevoir au moins un secret destiné à être utilisé dans un service transactionnel, le terminal mobile étant destiné à exécuter une application logicielle (120) destinée à permettre au terminal mobile d'interagir dans le cadre du service transactionnel, le terminal mobile intégrant ou étant destiné à être connecté à un élément de sécurité (110) stockant hermétiquement au moins une clé de signature et/ou de chiffrement, le terminal mobile étant adapté pour que, lors d'une phase de récupération du ou des secrets :
- l'application logicielle prépare (402) une requête de récupération du ou des secrets destinée à être envoyée à un système d'autorisation de transaction (160) ;
- l'application logicielle instruit (403) l'élément de sécurité d'apposer une signature et/ou un chiffrement à ladite requête préparée, à l'aide d'au moins une dite clé, et transmet (407) au système d'autorisation de transaction ladite requête signée et/ou chiffrée ;
- l'application logicielle reçoit (412) ledit ou lesdits secrets en provenance du système d'autorisation de transaction ;
et, pour effectuer la transaction, l'application logicielle transmet (509) à l'équipement ledit ou lesdits secrets ou des informations dérivées dudit ou desdits secrets,
où le ou lesdits secrets sont à durée de vie limitée, le ou les secrets sont stockés par l'application logicielle dans une mémoire du terminal mobile et ledit ou lesdits secrets ou les informations dérivées dudit ou desdits secrets sont transmises par l'application logicielle audit équipement afin de permettre à l'équipement de valider (511, 512) la transaction auprès du système d'autorisation de transaction grâce audit ou auxdits secrets à durée de vie limitée ou aux informations dérivées dudit ou desdits secrets à durée de vie limitée, et où l'élément de sécurité dispose d'une seconde clé, publique, contenue dans un certificat et d'une troisième clé, privée, permettant une mise en œuvre de chiffrement asymétrique, et, lors d'une phase préalable d'initialisation :
- l'application logicielle obtient (305) ledit certificat auprès de l'élément de sécurité ;
- l'application logicielle transmet (306) au système d'autorisation de transaction une requête d'initialisation du service transactionnel contenant le certificat obtenu, ainsi que des informations permettant d'identifier l'application logicielle et le terminal mobile ;
- le système d'autorisation de transaction transmet (310) à l'application logicielle chaque dite première clé sous forme chiffrée à l'aide de ladite seconde clé contenue dans le certificat reçu, en réponse à ladite requête d'initialisation du service transactionnel ; et
- l'application logicielle fournit (312) à l'élément de sécurité chaque dite première clé reçue sous forme chiffrée, afin de permettre à l'élément de sécurité de déchiffrer (313) chaque dite première clé grâce à ladite troisième clé.

## Patentansprüche

1. Verfahren zur Übertragung mindestens eines Geheimnisses, das dazu bestimmt ist, bei einem Transaktionsdienst verwendet zu werden, um eine Transaktion zwischen einem mobilen Endgerät (100) und einem Gerät (130) durchzuführen, wobei das mobile Endgerät eine Softwareanwendung (120) ausführt, die dazu bestimmt ist, dem mobilen Endgerät zu ermöglichen, im Rahmen des Transaktionsdienstes zu interagieren, wobei das mobile Endgerät ein Sicherheitselement (110) beinhaltet oder damit verbunden ist, in dem hermetisch mindestens ein erster Signatur- und/oder Verschlüsselungsschlüssel gespeichert ist, wobei das Verfahren dergestalt ist, dass während einer Phase des Abrufens des oder der Geheimnisse:
- die Softwareanwendung eine Aufforderung zum Abrufen des oder der Geheimnisse vorbereitet (402), die dazu bestimmt ist, an ein Transaktionsautorisierungssystem (160) gesendet zu werden;
- die Softwareanwendung das Sicherheitselement anweist (403), mithilfe mindestens eines ersten Schlüssels eine Signatur und/oder eine Verschlüsselung an der vorbereiteten Aufforderung anzubringen, und die signierte und/oder verschlüsselte Aufforderung an das Transaktionsautorisierungssystem überträgt (407);
- das Transaktionsautorisierungssystem nach der Verifizierung (408) dank einer Kenntnis des ersten Schlüssels, dass die signierte und/oder verschlüsselte Aufforderung echt ist, das oder die Geheimnisse an die Softwareanwendung überträgt (411);
und die Softwareanwendung zum Durchführen der Transaktion das oder die Geheimnisse oder aus dem oder den Geheimnissen abgeleitete Informationen an das Gerät überträgt (509), wobei das oder die Geheimisse eine begrenzte Lebensdauer haben, das oder die Geheimnisse von der Softwareanwendung in einem Speicher des mobilen Endgeräts gespeichert werden und das Transaktionsautorisierungssystem die Transaktion dank des oder der Geheimnisse mit begrenzter Lebensdauer validiert und wobei das Sicherheitselement über einen zweiten, öffentlichen, in einem Zertifikat enthaltenen Schlüssel verfügt und über einen dritten, privaten, Schlüssel, der eine Implementierung von asymmetrischer Verschlüsselung ermöglicht, und während einer vorherigen Initialisierungsphase:
- die Softwareanwendung das Zertifikat bei dem Sicherheitselement erhält (305);
- die Softwareanwendung an das Transaktionsautorisierungssystem eine Aufforderung zur Initialisierung des Transaktionsdienstes überträgt (306), die das erhaltene Zertifikat enthält, sowie Informationen, die es ermöglichen, die Softwareanwendung und das mobile Endgerät zu identifizieren;
- das Transaktionsautorisierungssystem an die Softwareanwendung jeden ersten Schlüssel in mithilfe des zweiten Schlüssels, der im empfangenen Zertifikat enthalten ist, verschlüsselter Form als Antwort auf die Aufforderung zur Initialisierung des Transaktionsdienstes überträgt (310); und
- die Softwareanwendung dem Sicherheitselement den in verschlüsselter Form empfangenen ersten Schlüssel bereitstellt (312), um dem Sicherheitselement zu ermöglichen, den ersten Schlüssel dank des dritten Schlüssels zu entschlüsseln (313).

2. Verfahren nach Anspruch 1, **dadurch gekennzeichnet, dass** das Transaktionsautorisierungssystem an die Softwareanwendung das oder die Geheimnisse mit begrenzter Lebensdauer in mithilfe mindestens eines ersten Schlüssels verschlüsselter Form überträgt und dass die Anwendung das Sicherheitselement anweist (413), das oder die in verschlüsselter Form empfangenen Geheimnisse mit begrenzter Lebensdauer zu entschlüsseln.

3. Verfahren nach Anspruch 1, **dadurch gekennzeichnet, dass** während der Initialisierungsphase:
- die Softwareanwendung dazu auffordert, dass der Nutzer des mobilen Endgeräts erste Daten zur persönlichen Identifizierung bereitstellt;
- die Softwareanwendung die ersten Daten zur persönlichen Identifizierung an das Sicherheitselement überträgt, um dem Sicherheitselement zu ermöglichen, die übertragenen ersten Daten zur persönlichen Identifizierung in Verbindung mit einer Kennung der Softwareanwendung und/oder mit jedem ersten Schlüssel zu speichern;
und, um eine Signatur und/oder eine Verschlüsselung durch das Sicherheitselement an einer Nachricht anbringen zu lassen:
- die Softwareanwendung dazu auffordert, dass der Nutzer des mobilen Endgeräts zweite Daten zur persönlichen Identifizierung bereitstellt;
- die Softwarenanwendung die zweiten Daten zur persönlichen Identifizierung an das Sicherheitselement überträgt, um dem Sicherheitselement zu ermöglichen, die Signatur nur dann anzubringen, wenn die ersten und zweiten Daten zur persönlichen Identifizierung übereinstimmen.

4. Verfahren nach einem der Ansprüche 1 bis 3, **dadurch gekennzeichnet, dass** zum Durchführen der Transaktion:
- die Softwareanwendung vom Gerät eine Authentifizierungsanfrage empfängt;
- die Softwareanwendung eine Antwort auf die empfangene Authentifizierungsanfrage vorbereitet und das Sicherheitselement anweist, mithilfe mindestens eines ersten Schlüssels eine Signatur und/oder eine Verschlüsselung an der vorbereiteten Antwort anzubringen, und die signierte und/oder verschlüsselte Antwort an das Gerät überträgt, um dem Gerät zu ermöglichen, die Transaktion beim Transaktionsautorisierungssystem ferner dank der Signatur und/oder der Verschlüsselung zu validieren.

5. Verfahren nach Anspruch 4, **dadurch gekennzeichnet, dass** die vom Sicherheitselement an der vorbereiteten Antwort angebrachte Signatur eine aus der folgenden Gruppe ist:
- eine Signatur, die zu einer in der vorbereiteten Antwort bereits vorhandenen Signatur hinzugefügt wird;
- eine Übersignatur einer in der vorbereiteten Antwort bereits vorhandenen Signatur durch Verschlüsseln der bereits vorhandenen Signatur;
- eine Übersignatur einer in der vorbereiteten Antwort bereits vorhandenen Signatur durch eine Exklusiv-ODER-Operation zwischen den beiden Signaturen; und
- eine Ersatzsignatur für eine in der vorbereiteten Antwort bereits vorhandene Signatur.

6. Verfahren nach einem der Ansprüche 4 und 5, **dadurch gekennzeichnet, dass**, wenn der Transaktionsdienst ein Kontaktlos-Bezahldienst ist, die Signatur vom Sicherheitselement in einem Feld angebracht wird, das in den Europay/MasterCard/Visa-Spezifikationen Authorisation Request Cryptogram genannt wird.

7. Verfahren nach einem der Ansprüche 1 bis 6, **dadurch gekennzeichnet, dass**, wenn die Softwareanwendung erkennt (601), dass das oder die Geheimnisse erneuert werden müssen:
- die Softwareanwendung eine Aufforderung zur Erneuerung des oder der Geheimnisse mit begrenzter Lebensdauer vorbereitet (602), die dazu bestimmt ist, an ein Transaktionsautorisierungssystem gesendet zu werden;
- die Softwareanwendung das Sicherheitselement anweist (603), mithilfe mindestens eines ersten Schlüssels eine Signatur und/oder Verschlüsselung an der vorbereiteten Aufforderung anzubringen, und die signierte und/oder verschlüsselte Aufforderung an das Transaktionsautorisierungssystem überträgt (607); und
- das Transaktionsautorisierungssystem nach der Verifizierung (609) dank der Kenntnis des ersten Schlüssels, dass die signierte und/oder verschlüsselte Aufforderung echt ist, ein oder mehrere neue Geheimnisse mit begrenzter Lebensdauer an die Softwareanwendung überträgt (611).

8. Verfahren nach einem der Ansprüche 1 bis 7, **dadurch gekennzeichnet, dass** der Transaktionsdienst ein Kontaktlos-Bankbezahldienst ist, das mobile Endgerät ein Smartphone ist und das Gerät ein Verkaufsstellenterminal ist, wobei das mobile Endgerät und das Gerät über Nahfeldkommunikation kommunizieren.

9. Mobiles Endgerät (100), das zum Durchführen einer Transaktion mit einem Gerät (130) bei einem Transaktionsdienst geeignet ist, wobei das mobile Endgerät geeignet ist, mindestens ein Geheimnis zu empfangen, das dazu bestimmt ist, bei einem Transaktionsdienst verwendet zu werden, wobei das mobile Endgerät dazu bestimmt ist, eine Softwareanwendung (120) auszuführen, die dazu bestimmt ist, dem mobilen Endgerät zu ermöglichen, im Rahmen des Transaktionsdienstes zu interagieren, wobei das mobile Endgerät ein Sicherheitselement (110) beinhaltet oder dazu bestimmt ist, mit einem Sicherheitselement verbunden zu werden, in dem hermetisch mindestens ein erster Signatur- und/oder Verschlüsselungsschlüssel gespeichert ist, wobei das mobile Endgerät dazu geeignet ist, dass während einer Phase des Abrufens des oder der Geheimnisse:
- die Softwareanwendung eine Aufforderung zum Abrufen des oder der Geheimnisse vorbereitet (402), die dazu bestimmt ist, an ein Transaktionsautorisierungssystem (160) gesendet zu werden;
- die Softwareanwendung das Sicherheitselement anweist (403), mithilfe mindestens eines Schlüssels eine Signatur und/oder Verschlüsselung an der vorbereiteten Aufforderung anzubringen, und die signierte und/oder verschlüsselte Aufforderung an das Transaktionsautorisierungssystem überträgt (407);
- die Softwareanwendung das oder die vom Transaktionsautorisierungssystem kommenden Geheimnisse empfängt (412);
und die Softwareanwendung zum Durchführen der Transaktion das oder die Geheimnisse oder von dem oder den Geheimnissen abgeleitete Informationen an das Gerät überträgt (509),
wobei das oder die Geheimnisse eine begrenzte Lebensdauer haben, das oder die Geheimnisse von der Softwareanwendung in einem Speicher des mobilen Endgeräts gespeichert werden und das oder die Geheimnisse oder die von dem oder den Geheimnissen abgeleiteten Informationen von der Softwareanwendung an das Gerät übertragen werden, um dem Gerät zu ermöglichen, die Transaktion beim Transaktionsautorisierungssystem dank des oder der Geheimnisse mit begrenzter Lebensdauer oder der aus dem oder den Geheimnissen mit begrenzter Lebensdauer abgeleiteten Informationen zu validieren (511, 512), und wobei das Sicherheitselement über einen zweiten, öffentlichen, in einem Zertifikat enthaltenen Schlüssel verfügt und über einen dritten, privaten, Schlüssel, der eine Implementierung von asymmetrischer Verschlüsselung ermöglicht, und während einer vorherigen Initialisierungsphase:
- die Softwareanwendung das Zertifikat bei dem Sicherheitselement erhält (305);
- die Softwareanwendung an das Transaktionsautorisierungssystem eine Aufforderung zur Initialisierung des Transaktionsdienstes überträgt (306), die das erhaltene Zertifikat enthält, sowie Informationen, die es ermöglichen, die Softwareanwendung und das mobile Endgerät zu identifizieren;
- das Transaktionsautorisierungssystem an die Softwareanwendung jeden ersten Schlüssel in mithilfe des zweiten Schlüssels, der im empfangenen Zertifikat enthalten ist, verschlüsselter Form als Antwort auf die Aufforderung zur Initialisierung des Transaktionsdienstes überträgt (310); und
- die Softwareanwendung dem Sicherheitselement den in verschlüsselter Form empfangenen ersten Schlüssel bereitstellt (312), um dem Sicherheitselement zu ermöglichen, den ersten Schlüssel dank des dritten Schlüssels zu entschlüsseln (313).

## Claims

1. Method for transmitting at least one secret intended to be used in a transactional service for performing a transaction between a mobile terminal (100) and an equipment (130), the mobile terminal running a software application (120) intended to allow the mobile terminal to interact in the context of the transactional services, the mobile terminal incorporating or being connected to a security element (110) securely storing at least one first signature key and/or encryption key, the method being such that, in a phase of retrieving the one or more secrets:
- the software application prepares (402) a request to retrieve the one or more secrets, which is intended to be sent to a transaction authorization system (160);
- the software application instructs (403) the security element to attach a signature and/or an encryption to said prepared request using at least one said first key, and transmits (407) said signed and/or encrypted request to the transaction authorization system;
- the transaction authorization system transmits (411) said one or more secrets to the software application after verifying (408), by virtue of knowledge of each said first key, that said signed and/or encrypted request is authentic;
and, to perform the transaction, the software application transmits (509) said one or more secrets or information derived from said one or more secrets to the equipment,
wherein the one or more secrets have a limited lifespan, the one or more secrets are stored by the software application in a memory of the mobile terminal, and
wherein the transaction authorization system validates the transaction by virtue of said one or more secrets of limited lifespan, or of the information derived from said one or more secrets of limited lifespan, and
wherein the security element has a second, public key contained in a certificate and a third, private key, allowing asymmetric encryption to be implemented and, in a prior initialization phase:
- the software application obtains (305) said certificate via the security element;
- the software application transmits (306), to the transaction authorization system, a request to initialize the transactional service containing the obtained certificate, and information allowing the software application and the mobile terminal to be identified;
- the transaction authorization system transmits (310), to the software application, each said first key in encrypted form using said second key contained in the received certificate in response to said request to initialize the transactional service; and
- the software application delivers (312) each said first key received in encrypted form to the security element in order to allow the security element to decrypt (313) each said first key by virtue of said third key.

2. Method according to Claim 1, **characterized in that** the transaction authorization system transmits said one or more secrets of limited lifespan to the software application in encrypted form using at least one said first key, and **in that** the application instructs (413) the security element to decrypt said one or more secrets of limited lifespan received in encrypted form.

3. Method according to Claim 1, **characterized in that**, in the initialization phase:
- the software application requires the user of the mobile terminal to provide first personal identification data;
- the software application transmits the first personal identification data to the security element in order to allow the security element to store the transmitted first personal identification data in association with an identifier of the software application and/or with each said first key;
and, to attach a signature and/or an encryption to a message by means of the security module:
- the software application requires the user of the mobile terminal to provide second personal identification data;
- the software application transmits the second personal identification data to the security element in order to allow the security element to attach the signature only when the first and second personal identification data coincide.

4. Method according to any one of Claims 1 to 3, **characterized in that**, to perform the transaction,
- the software application receives an authentication request from the equipment;
- the software application prepares a response to the received authentication request and instructs the security element to attach a signature and/or an encryption, using at least one said first key, to said prepared response, and transmits said signed and/or encrypted response to the equipment in order to allow the equipment to validate the transaction with the transaction authorization system and moreover by virtue of said signature and/or of said encryption.

5. Method according to Claim 4, **characterized in that** the signature attached to said prepared response by the security element belongs to the following group:
- a signature added to a signature already present in said prepared response;
- a signature on a signature already present in said prepared response, by encrypting the signature already present;
- a signature on a signature already present in said prepared response, by means of an exclusive-OR operation between the two signatures; and
- a signature replacing a signature already present in said prepared response.

6. Method according to either of Claims 4 and 5, **characterized in that**, the transactional service being a contactless payment service, the signature is attached by the security element in a field called the Authorization Request Cryptogram in the Europay MasterCard Visa specifications.

7. Method according to any one of Claims 1 to 6, **characterized in that**, when the software application detects (601) that said one or more secrets are to be renewed:
- the software application prepares (602) a request to renew the one or more secrets of limited lifespan intended to be sent to the transaction authorization system;
- the software application instructs (603) the security element to attach a signature and/or an encryption, using at least one said first key, to said prepared request and transmits (607) said signed and/or encrypted request to the transaction authorization system; and
- the transaction authorization system transmits (611) one or more new secrets of limited lifespan to the software application after verifying (609), by virtue of knowledge of each said first key, that said signed and/or encrypted request is authentic.

8. Method according to any one of Claims 1 to 7, **characterized in that** the transactional service is a contactless bank payment service, the mobile terminal is a smartphone and the equipment is a point for accepting payment, the mobile terminal and the equipment communicating by near-field communications.

9. Mobile terminal (100) suitable for performing a transaction with an equipment (130) in a transactional service, the mobile terminal being suitable for receiving at least one secret intended to be used in a transactional service, the mobile terminal being intended to run a software application (120) intended to allow the mobile terminal to interact in the context of the transactional service, the mobile terminal incorporating or being intended to be connected to a security element (110) securely storing at least one signature key and/or encryption key, the mobile terminal being arranged so that, in a phase of retrieving the one or more secrets:
- the software application prepares (402) a request to retrieve the one or more secrets, which is intended to be sent to a transaction authorization system (160);
- the software application instructs (403) the security element to attach a signature and/or an encryption to said prepared request using at least one said key, and transmits (407) said signed and/or encrypted request to the transaction authorization system;
- the software application receives (412) said one or more secrets from the transaction authorization system;
and, to perform the transaction, the software application transmits (509) said one or more secrets or information derived from said one or more secrets to the equipment,
wherein the one or more secrets have a limited lifespan, the one or more secrets are stored by the software application in a memory of the mobile terminal and said one or more secrets or the information derived from said one or more secrets are/is transmitted to said equipment by the software application in order to allow the equipment to validate (511, 512) the transaction with the transaction authorization system by virtue of said one or more secrets of limited lifespan or of the information derived from said one or more secrets of limited lifespan, and wherein the security element has a second, public key contained in a certificate and a third, private key, allowing asymmetric encryption to be implemented and, in a prior initialization phase:
- the software application obtains (305) said certificate via the security element;
- the software application transmits (306), to the transaction authorization system, a request to initialize the transactional service containing the obtained certificate, and information allowing the software application and the mobile terminal to be identified;
- the transaction authorization system transmits (310), to the software application, each said first key in encrypted form using said second key contained in the received certificate in response to said request to initialize the transactional service; and
- the software application delivers (312) each said first key received in encrypted form to the security element in order to allow the security element to decrypt (313) each said first key by virtue of said third key.
